# EUROPEAN PATENT APPLICATION

(11) **EP 4 483 977 A1**
(43) Date of publication of application: **01.01.2025**
(21) Application number: 22927394.1
(22) Date of filing: 21.02.2022
(51) Int. Cl.: A63F 13/79, G06N 20/00, G06N 3/04, G06Q 30/02

(54) **SYSTEM FOR PREDICTING USER GAME PLAY BASED ON AI**

(71) Applicant: GNA Company Corp., Asan-si, Chungcheongnam-do 31419 (KR)
(72) Inventor: CHOI, Jiwoong, Seoul 06587 (KR)
(74) Representative: ABG Intellectual Property Law, S.L.
(86) International application number: PCT/KR2022/002476
(87) International publication number: WO 2023/157994

(57) **Abstract**

A system for predicting a game play by a user comprises: a collection module that receives and collects, from user terminals, a provision of play information that is information related to plays by users in games; a processing module that processes the collected play information into a data form required for analysis; and an AI analysis module that derives predictive values of behaviors related to games, which are expected from the users in the future, by analyzing the processed play information via machine learning using an artificial intelligence algorithm. A predictive value for a future play by a user can be derived by applying an artificial intelligence algorithm to play information of the user regarding a game. This predictive value is used for target marketing and the like.

## Description

### Technical Field

The present invention relates to an AI-based system for predicting user gameplay, and more specifically, to a system that predicts user behavior related to future gameplay based on play information such as users' log records.

### Background of the Invention

With the advancement of IT technology, various computer games have become popular, and many users are enjoying online games. As many game developers release different types of games competitively, there is a need to market these games to users. Game developers looking to market their products find it challenging to target specific demographics due to the difficulty of understanding the play tendencies of a broad user base. Consequently, the effort and cost of marketing are often disproportionate to its effectiveness. Furthermore, the online advertising market is plagued with fraudulent manipulation, such as artificially inflating ad traffic, which leads to increased costs for game developers and ultimately higher usage fees charged to users.

Essential for targeted marketing is the analysis of user tendencies. Knowing how often and how long users play games can enhance the effectiveness of advertisements directed at them. However, relying solely on these analyses limits the impact of targeted advertising. If it were possible to predict a user's future gaming behavior based on past play patterns, more effective and tailored advertising could be executed based on these predictions. For example, if it is anticipated that a particular user will play a game from 9 PM for two hours tonight, and a new game that the user is likely to enjoy is available, sending a coupon for a free trial of this new game right before they start playing could significantly enhance the effectiveness of the advertisement. Such targeted advertising based on predictions is expected to be far more effective compared to simple tendency analysis.

### Detailed Description of the Invention

### Problem to be solved

The present invention was conceived to solve the aforementioned problems, and the object of this invention is to provide a method that applies artificial intelligence algorithms to users' play information to predict their future gameplay.

Furthermore, another object of the present invention is to enable game developers to use these predictions, for example, in targeted marketing. This allows developers to target advertisements to users who are expected to have a high interest in newly released games.

### Technical Solution

To achieve the above object, the present invention provides a user gameplay prediction system comprising: a collection module that receives and collects play information related to plays of games of users from user devices used by the users; a processing module that processes the play information collected by the collection module into a data format necessary for analysis; and an AI analysis module that analyzes the play information processed by the processing module using machine learning with artificial intelligence algorithms to derive predictions about future gaming-related behaviors of the users.

Here, the play information includes one or more of input signals entered for playing games on the user devices, output signals generated by the user devices during gameplay, log records of the users to the games, installation and uninstallation history of gaming programs on the user devices, play ratings of the users for the games, and payment history of the users regarding the games. The predictions include one or more of times that the users will play the games, whether the users will play the games at specific times, whether the users will play specific games, whether and/or how much the users will pay for the games, changes in the number of users for specific games, and whether the users will stop playing specific games.

The AI analysis module further derives a certain determination result related to the gameplay together with the predictions. The determination result includes one or more of method of game manipulation of the users, whether the users are robots, the graphics and/or sound of the games preferred by the users, the genre of the games preferred by the users, and whether there is any fraudulent activity in the users' gameplay.

The processing module extracts features of each event in the play information and vectorizes the extracted features through word embedding.

The AI analysis module includes a CNN module that applies a Convolutional Neural Network CNN algorithm to the vectorized play information to derive the predictions, an LSTM module that applies the a Long-Short Term Memory LSTM algorithm to the vectorized play information to derive the predictions, and a static classification module that applies a static classification algorithm including Random Forest and/or Decision Tree to the vectorized play information to derive the predictions.

Further, the AI analysis module further includes a neural network module that derives the predictions with a neural network algorithm by combining results of at least two of the CNN module, the LSTM module, and the static classification module.

The user gameplay prediction system of the present invention can further comprise a transmission module that transmits the predictions derived by the AI analysis module to a game provider server operated by a game provider.

The user gameplay prediction system of the present invention can further comprise a promotion management module that receives promotion information related to promotions that the game provider wants to offer to the users from the game provider server and provides the promotion information to the user devices.

### Effect of the Invention

According to the present invention, an artificial intelligence algorithm can be applied to users' play information to derive predictions about their future gameplay. These predictions can be utilized, for example, in targeted marketing, allowing for targeted advertising to users who are expected to have a high interest in newly released games.

### Brief Description of the Drawings

Figure 1 shows an overall configuration diagram including a user gameplay prediction system according to the invention.
Figure 2 shows a detailed configuration diagram of the AI analysis module in Figure 1.
Figure 3 illustrates an example of the form of data input into the CNN module depicted in Figure 2.

### Preferred Embodiment of the Invention

In the following, the invention will be described in more detail with reference to the drawings.

In the descriptions below, components listed as 'systems', 'modules', etc., can each be implemented by a single computer or server or can be configured as distinct functional modules within a single computer or server. In describing this invention, detailed configurations and descriptions are omitted for general components that are not directly related to the essence of this invention or are commonly provided as obvious.

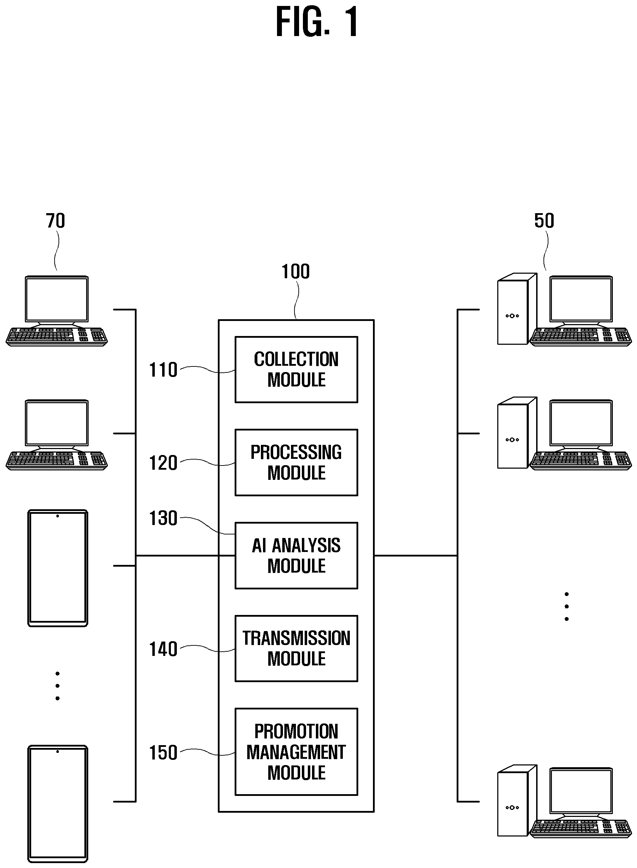

Figure 1 shows a schematic diagram of the overall configuration that includes a user gameplay prediction system according to the invention.

The system 100 of this invention receives play information from users who play games and derives predictions of user behavior based on the play information. For this, the user devices 70 used by the users are connected to the system 100 of the invention via the internet, allowing for communication.

Additionally, the system 100 can provide these predictions to game developers to generate or transmit promotional information necessary for promoting games, or receive promotional requests from game developers and provide promotional information to users whose behaviors are expected to match the game based on these predictions. For this, the game provider servers 50 operated by the game developers are connected to the system 100 of the invention via the internet, allowing for mutual communication.

Various methods can implement the connection that allows the system 100 to communicate with the user devices 70 and receive play information from them. However, making user devices 70 to connect spontaneously to the system 100 can be considered inadequate for aggregating diverse play information, and therefore, it is preferable to have an application installed on the user devices 70 that sends the play information to the system 100 whenever the user plays a game. For instance, a strategy could be used where an application that transmits the play information is installed under the user's consent when installing a commonly used security program.

As depicted in Figure 1, the system 100 of the invention is composed of a collection module 110, processing module 120, AI analysis module 130, transmission module 140, and promotion management module 150.

The collection module 110 gathers play information from user devices 70, which pertains to the users' gameplay. This play information serves as the foundation for deriving predictions about users' future gaming-related behaviors and primarily includes data related to users' play patterns. The play information may include input signals entered to the user devices 70 for playing a game and output signals produced by the user devices 70 during gameplay. Analyzing these input and output signals, such as the number, frequency, and speed of inputs or the sounds produced during gameplay, can help identify users' gaming tendencies or the types of games they prefer. The play information may also contain log records of users' gaming activities. The log records can be used as the data for deriving the frequency and duration of play and the times of day games are played, by analyzing when users start and end sessions for each game. The paly information can also include records of game programs being installed and uninstalled on the user devices 70. This records can provide insights into the users' continuous preferences and changes in the types of games they enjoy. The play information can include users' gameplay ratings. The gameplay ratings can help determine the users' gaming proficiency and whether they are enthusiasts. The information may also contain details about users' purchases in games, which can reveal how much users are willing to spend on gaming.

The processing module 120 refines the collected play information into a format necessary for the AI analysis module 130 to perform its analysis. The processing module 120 might vectorize the features extracted from each event in the play information through word embedding. Specifically, users' play information is classified according to each event and matched with corresponding words. For example, the play information can be classified to the respective events such as Login, Signup, Levelup, etc. These classified events are then converted into vectors through word embedding. The vectors for each event will have similar values if the correlation between the events is high, and dissimilar values if the correlation is low. Based on these vectorized data values, features are classified. These classified features are used as input data for the learning algorithm in the AI analysis module 130.

The AI analysis module 130 uses machine learning with artificial intelligence algorithms to analyze the play information processed by the processing module 120, and derives predictions about the future gaming-related behaviors of each user. These predictions are the essential results sought by the system 100 and can include various types of results. That is, the predictions can include when users will play games, whether they will play at specific times, which games they will play, whether they will make payment for games and/or the amount of such a payment, changes in the number of users for specific games, and whether users will stop playing specific games any more in the future. These predictive outputs can be continuously produced by the system 100, or generated upon request from the game provider servers 50 for specific items.

For example, if the game provider server 50 intends to send specific advertisement content to users predicted to play a game between 9 PM and 10 PM tonight, the game provider server 50 sends this request to the system 100 of the invention. The AI analysis module 130 of the system 100 runs its analysis algorithms to derive predictions for this item. Based on the derived results, the system 100 transmits the received advertisement content sent from the game provider server 50 to the predicted users' devices 70. Preferably, the AI analysis module 130 generates results distinguishing each prediction item for each user as either 1 or 0. For instance, in the above case, predictions for all users might be determined as "User1 = 0, User2 = 0, User3 = 1, etc."

Additionally, the AI analysis module 130 of the invention is configured to derive a certain determination result related to gameplay along with the predictions as described. The determination result is also derived by the AI algorithm.

The determination result is a concept distinct from the predictions of future user behaviors, which means a judgement about various statistics for the users' gameplay or about abnormal actions associated with overall gameplay of the users. For example, the determination results might include analysis of users' gaming control methods, whether a user is a robot (i.e., if the game is being played by a machine developed to simulate human gameplay), the graphics and/or audio of the games preferred by users, the genre of games preferred by users, and whether there is any cheating or fraudulent action in user gameplay. Relying simply on the occurrence of specific events to make these judgments can lead to inaccuracies. Therefore, by applying the artificial intelligence algorithms of the invention, the accuracy of these judgments can be adaptively improved through machine learning. The transmission module 140 transmits the predictions and/or the determination results derived by the AI analysis module 130 to the game provider server 50. With the predictions and/or determination results provided by the transmission module 140, the game provider server 50 can predict the user behaviors for advertising purposes or refer the determination results to set directions for game development. It is preferable that the transmission from the transmission module 140 occurs only upon a specific request from the game provider server 50.

The promotion management module 150 receives promotional information related to promotions that the game provider wants to offer to users from the game provider server 50 and provides this promotional information to user devices. The promotional information might include advertisements for games provided by the game provider server 50, rewards for those games, coupons for free trials of the games, or other individualized content specifically tailored for users predicted to match the characteristics of the games offered by the game provider server 50 among all users.

In the following, the constitution and operation of the AI analysis module 130 within the system 100 of this invention is described in greater detail.

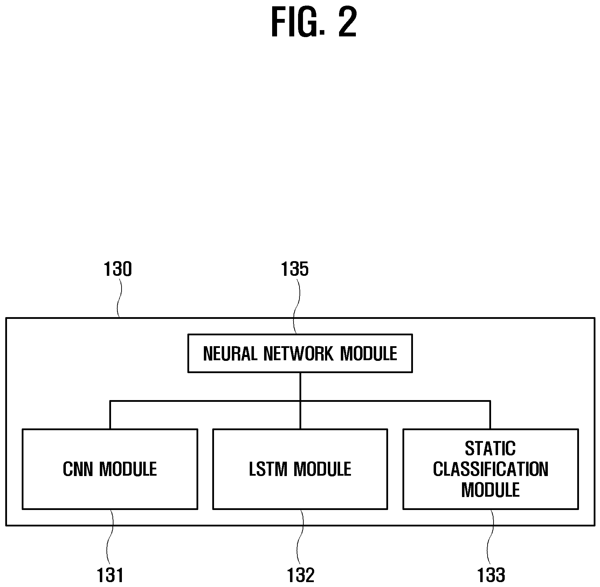

Figure 2 shows a detailed configuration of the AI analysis module 130 in Figure 1. The AI analysis module 130 includes a CNN module 131, an LSTM module 132, a static classification module 133, and a neural network module 135.

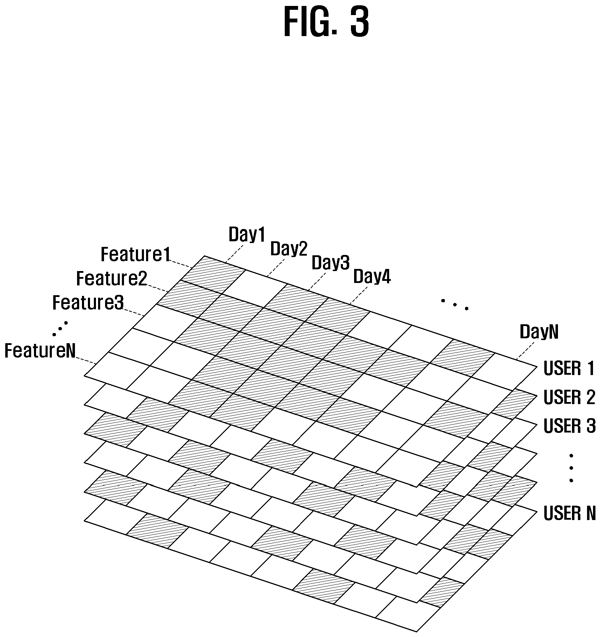

The CNN module 131 applies a Convolutional Neural Network CNN algorithm to the vectorized play information prepared by the processing module 120 to derive predictions. The CNN algorithm is optimized for image classification processes, mainly used to identify features in visualized data with the operation of filters therein. Figure 3 illustrates an example of the form of the data input into the CNN module 131, where each user's data, vectorized and extracted by the processing module 120, is organized in a format similar to image data. In Figure 3, the play information for each user (User1, User2, ...) is arranged in rows by date (Day1, Day2, ...), and the play information for each date is organized into columns by features (Feature1, Feature2, ...), forming an image-like layout for each user's data. The play information to be input to the CNN module 131 is generated by forming each play information of each user as many as the number of the users. The CNN module 131 applies the CNN algorithm to this categorized play information to derive predictions for a specific item. The CNN algorithm provides an optimized method for applying machine learning to such visualized forms of play information.

The LSTM module 132 applies a Long Short-Term Memory LSTM algorithm to the vectorized play information to derive predictions. The LSTM algorithm is an advancement over the RNN algorithm which remembers previous input data for analysis only for a short period of time, and is optimized for making continuous predictions over long period of data. For instance, when analyzing users' gameplay log data to games, it is necessary to analyze data both within a single date and across multiple dates. As such log data is being input, other kinds of data, such as input and output signals or purchase records, might mix in. When only the log data analysis is required from the various kinds of input play information, the LSTM algorithm provides an effective analysis tool with fewer errors.

The static classification module 133 applies static classification algorithms, including Random Forest and/or Decision Trees, to the vectorized play information to derive predictions. Static classification techniques are traditional methods that have been used for a long time in various fields, such as spam email classification, malware detection, image classification, and compound classification, using formula-based classifications before the proliferation of deep learning research. Applying a static classification algorithm is suitable for producing very stable and balanced results. Therefore, combining static classification algorithms with CNN and LSTM algorithms can merge stable results with the specialized outcomes of the CNN and LSTM algorithms, increasing the accuracy of predictions.

The neural network module 135 derives predictions based on the combined results of the output from the CNN module 131, LSTM module 132, and the static classification module 133 using neural network algorithms. Typically, machine learning models are specialized to find solutions in specific domains. In utilizing the machine learning, individual features of each model can be combined to form a more powerful model, for example, the results of Model A can be used as inputs for Model B or results from various models can be combined using ensemble techniques. Ensemble techniques can apply weighting to the results of each model to derive a more effective final outcome, improving accuracy when there is diversity among the individual models. In this invention, the predictions are refined by combining the outputs of the aforementioned modules 131, 132 and 133 using a neural network algorithm. Alternatively, the neural network module 135 could be configured to combine the outputs of only two of these modules instead of all of the CNN module 131, LSTM module 132, and the static classification module 133.

As described above, this invention allows for deriving predictions about users' future gameplay by applying artificial intelligence algorithms to play information. Based on these predictions, for example in targeted marketing, game developers can advertise newly released games to users predicted to have a high interest in these games. Additionally, through this invention, various predictions and determination results can be obtained, which can be used to identify users' needs related to the types and characteristics of new games. Thus, this invention can also be utilized in setting directions for game development that are likely to be popular with many users.

Although details of the disclosure have been described above through a few embodiments of the disclosure with reference to the accompanying drawings, the embodiments are merely for the illustrative and descriptive purposes only, and it will be understood by a person having ordinary skill in the art that various changes and other equivalent embodiments may be made from these embodiments. Thus, the scope of the invention should be defined by the technical subject matters of the appended claims.

## Claims

1. A user gameplay prediction system comprising:
a collection module that receives and collects play information related to plays of games of users from user devices used by the users;
a processing module that processes the play information collected by the collection module into a data format necessary for analysis; and
an AI analysis module that analyzes the play information processed by the processing module using machine learning with artificial intelligence algorithms to derive predictions about future gaming-related behaviors of the users;
wherein the play information includes one or more of input signals entered for playing games on the user devices, output signals generated by the user devices during gameplay,
log records of the users to the games, installation and uninstallation history of gaming programs on the user devices, play ratings of the users for the games, and payment history of the users regarding the games, and
the predictions include one or more of times that the users will play the games, whether the users will play the games at specific times, whether the users will play specific games,
whether and/or how much the users will pay for the games, changes in the number of users for specific games, and whether the users will stop playing specific games.

2. A user gameplay prediction system of claim 1, wherein
the AI analysis module further derives a certain determination result related to the gameplay together with the predictions, and
the determination result includes one or more of method of game manipulation of the users, whether the users are robots, the graphics and/or sound of the games preferred by the users, the genre of the games preferred by the users, and whether there is any fraudulent activity in the users' gameplay.

3. The user gameplay prediction system of claim 2, wherein
the processing module extracts features of each event in the play information and vectorizes the extracted features through word embedding.

4. The user gameplay prediction system of claim 3, wherein
the AI analysis module includes a CNN module that applies a Convolutional Neural Network CNN algorithm to the vectorized play information to derive the predictions.

5. The user gameplay prediction system of claim 4, wherein
the AI analysis module further includes an LSTM module that applies the a Long-Short Term Memory LSTM algorithm to the vectorized play information to derive the predictions.

6. The user gameplay prediction system of claim 5, wherein
the AI analysis module further includes a static classification module that applies a static classification algorithm including Random Forest and/or Decision Tree to the vectorized play information to derive the predictions.

7. The user gameplay prediction system of claim 6, wherein
the AI analysis module further includes a neural network module that derives the predictions with a neural network algorithm by combining results of at least two of the CNN module, the LSTM module, and the static classification module.

8. The user gameplay prediction system of any one of claims 1 to 7, further comprising a transmission module that transmits the predictions derived by the AI analysis module to a game provider server operated by a game provider.

9. The user gameplay prediction system of any one of claims 1 to 7, further comprising a promotion management module that receives promotion information related to promotions that the game provider wants to offer to the users from the game provider server and provides the promotion information to the user devices.
